(19) Europäisches Patentamt
European Patent Office
Office européen des brevets

(11) **EP 3 220 185 B1**

(12) **EUROPEAN PATENT SPECIFICATION**

(45) Date of publication and mention
of the grant of the patent:
**24.04.2019 Bulletin 2019/17**

(51) Int Cl.:
**G02B 27/00** *(2006.01)*    **H04N 13/232** *(2018.01)*
**G03B 35/08** *(2006.01)*    **B82Y 10/00** *(2011.01)*

(21) Application number: **17160543.9**

(22) Date of filing: **13.03.2017**

(54) **DEVICE AND PROCESS FOR THE PLENOPTIC CAPTURE OF IMAGES**

VORRICHTUNG UND VERFAHREN ZUR PLENOPTISCHEN ERFASSUNG VON BILDERN

DISPOSITIF ET PROCÉDÉ DE CAPTURE PLÉNOPTIQUE D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2016 IT UA20161688**

(43) Date of publication of application:
**20.09.2017 Bulletin 2017/38**

(73) Proprietor: **Universita' degli Studi di Bari
70121 Bari (IT)**

(72) Inventors:
- **D'ANGELO, Milena**
  70126 Bari BA (IT)
- **GARUCCIO, Augusto**
  70125 Bari BA (IT)
- **PEPE, Francesco Vincenzo**
  70132 Bari BA (IT)
- **MACCHIA, Teresa**
  70010 Adelfia BA (IT)
- **VACCARELLI, Ornella**
  70042 Mola di Bari (IT)

(74) Representative: **Trupiano, Federica
Marietti, Gislon e Trupiano S.r.l.
Via Larga, 16
20122 Milano (IT)**

(56) References cited:
**CN-A- 102 087 411    US-A1- 2011 284 724**

- **ALEJANDRA VALENCIA ET AL: "Two-photon ghost imaging with thermal light", ARXIV.ORG, CORNELL UNIVERSITY LIBRARY, 201 OLIN LIBRARY CORNELL UNIVERSITY ITHACA, NY 14853, 31 July 2004 (2004-07-31), XP080164480, DOI: 10.1103/PHYSREVLETT.94.063601**
- **MILENA D'ANGELO ET AL: "Correlation Plenoptic Imaging", PHYSICAL REVIEW LETTERS, vol. 116, no. 22, 1 June 2016 (2016-06-01), XP055317060, US ISSN: 0031-9007, DOI: 10.1103/PhysRevLett.116.223602**
- **FRANCESCO V PEPE ET AL: "Correlation Plenoptic Imaging With Entangled Photons", ARXIV.ORG, CORNELL UNIVERSITY LIBRARY, 201 OLIN LIBRARY CORNELL UNIVERSITY ITHACA, NY 14853, 7 June 2016 (2016-06-07), XP080706501, DOI: 10.3390/TECHNOLOGIES4020017**

**Description**

FIELD OF THE INVENTION

The object of the present invention is a plenoptic image capturing technique to capture images in the field of photography, cinematography, microscopy and stereoscopy.

In particular, the plenoptic shooting process according to the present invention is named "Correlation Plenoptic Imaging" (CPI), i.e. it refers to a plenoptic capture of images based on the spatio-temporal correlation of light intensities recorded by sensors prearranged so as to capture spatial and angular measures of the image.

KNOWN PREVIOUS ART

"Plenoptic capture of images" means a particular optical process allowing the capture of both the location and the propagation direction of light in a given scene. In this way, a spatial measure and an angular measure can be obtained, which together allow a three-dimensional reconstruction of the captured image.

In fact, in a step of processing the captured image it is possible, for example, either to change the position of the focal plane of the image or to extend the depth of field of the image.

The currently known conventional technique to capture images allows the magnification, the position of the focal plane and the depth of field to be selected by means of suitable lenses positioned upstream of the image capturing sensor.

However, the conventional technique to capture images has the limit of providing a two-dimensional representation of an originally three-dimensional scene. The three-dimensional representation of images is useful in a variety of technical applications, such as those relating to the modeling of components to be used in virtual simulation environments, or those relating to the representation of objects aiming at prototyping, design, production, marketing, inspection and maintenance, or those generally relating to an improved representation of an object of a three-dimensional scene, so as to ensure improved experiences for the user and more realistic results.

Furthermore, with the conventional technique to capture images, neither the position of the focal plane nor the depth of field can be changed at a later time after capturing of the image. Very frequently, in photography field, there is the need to focus a particular plane or to select the depth of field of the scene of the image at a later time after the capture.

Therefore, the purpose of the plenoptic image capturing technique is to solve many drawbacks of the conventional technique to capture images.

The currently known plenoptic image capturing technique allows the obtainment of images having different focal planes in different positions of the three-dimensional space of the image of the scene. This characteristic is possible thanks to the capture of both spatial and angular measures of the image. "Spatial measure" means the conventional two-dimensional capture of the scene image, whereas "angular measure" means the capture of the information required to determine the (angular) propagation direction of the light beam coming from the scene to be captured. In a processing step following the capture of the image, the spatial measure and the angular one can be combined so as to reconstruct a three-dimensional image.

The currently known plenoptic image capturing technique is based on inserting a microlens array arranged between a main lens adapted to focus the image on the microlens array, and a sensor adapted to capture the image of a given scene. The microlens array has double function. On the one hand, it acts as a dot array adapted to capture the spatial measure of the scene, on the other, it reproduces on the sensor a sequence of images of the main lens (one per each microlens), thus providing the angular measure of the scene.

Unlike the conventional technique to capture images, a device for the plenoptic capture of images (plenoptic imaging device) captures light beams instead of dot or "pixels" of information. This means that in processing an image, different perspectives or views of the scene can be obtained, thus allowing the user to select the focused plane of the scene and the depth of field after the capture of the image, to obtain a three-dimensional reconstruction of the scene, or to produce one or more views of the same scene after the capture of the single image.

However, the drawback of the currently known plenoptic image capturing technique is to produce low-resolution images. In fact, unlike conventional devices for capturing images, the currently known plenoptic image capturing technique provides for the use of a single sensor for simultaneously capturing spatial and angular measures of the scene. This characteristic limits the spatial resolution of the captured image in that part of the resolution capability of the sensor is sacrificed for the angular measure. Furthermore, in the currently known plenoptic image capturing technique, inverse proportionality ascribable to diffraction links the maximum spatial and angular resolutions. Therefore, low resolution is a drawback of images produced by known devices for the plenoptic capture of images, i.e. they are characterized in that the resolution of the images is well below the resolution given by the diffraction limit.

The document US 7620309 describes a device for the plenoptic capture of images (plenoptic imaging system) comprising a conventional main lens and a digital capturing sensor CCD (Charge Coupled Device) to digitally capture images. The described device also comprises a microlens array arranged between the scene to be captured and the main lens of the device.

Therefore, unlike other currently known devices for the plenoptic capture of images, in which starting from the external scene light rays propagate first through the main lens, then through the microlens array, to be finally captured by the CCD sensor, document US 7620309 describes a device in which the position of the main lens is exchanged with that of the microlens array. Furthermore, by decreasing the number of microlenses, a reduced number of high-resolution images can be captured instead of a high number of low-resolution images, as is the case for the other prior art plenoptic devices. After detecting the image, an image processing device designed to obtain a large number of high-resolution images from the reduced number of high-resolution captured images can be used, as above described. However, the capturing device described in US 7620309 is not able to simultaneously increase the resolution of captured images and the number of original views of the scene to be captured. In fact, a high number of views can be obtained only by means of an interpolation process following the capture of the scene image. Furthermore, the fundamental problem of the currently known devices for the plenoptic capture of images, i.e. the maximum spatial and angular resolutions being inversely proportional due to diffraction, is not solved by the document US 7620309. In other words, if a microlens array for capturing spatial and angular measures of the scene is still used, then spatial and angular resolutions of the reproduced image are still coupled. The coupling of spatial and angular resolutions results in the production of many low-resolution views or few high-resolution views, but never in the production of a large number of original high-resolution views.

Therefore, as evident, it is disadvantageous not be able to decouple the resolutions of spatial and angular measurements of the captured image, which would provide images having not only a high number of views, but also high resolution.

Alejandra Valencia et Al. (Cornell University Library, XP080164480) discloses two-photon coherent and two-photon incoherent imaging concept of imaging, to describe the different physics behind entangled and thermal ghost image. Particularly, the Authors presents the first experimental demonstration of two-photon ghost imaging with thermal-like sources.

US 2011/0284724 discloses a system and a method for obtaining an image of an object out of line of sight, enabling imaging of an object or subject area using a detector that is not in the direct line of sight or field of view of the image, thus creating the possibility of imaging around corners, imaging of concealed objects, imaging of objects not in the line-of-sight to the detector.

CN 102087411 discloses a quantum imaging method and a quantum imaging system, wherein the quantum imaging method comprises the following steps: generating chaotic lasers; dividing the chaotic lasers into pilot lights which is used for irradiating objects waiting for imaging and idle lights; making the pilot lights irradiate the objects; carrying out a barrel measurement of the pilot lights which have irradiated the objects , and carrying out a correlation measurement with the idle lights to convert time correlation into space correlation; carrying out multiple correlation measurements for several times; and carrying out signal processing for the data of correlation measurement by utilizing compression perception algorithm to obtain the images of the objects.

A further problem of the plenoptic capturing devices of the known art, is the poor achievable depth of field. This type of problem and the low angular resolution of the captured image are closely correlated, because the angular resolution is linked to the number of focused views that can be captured in a single plenoptic image, and therefore to the depth of field of the image.

A further problem of the plenoptic image capturing technique of the known art, is the technique for processing the captured image, according to which technique the position of the focal plane within the image scene can be adjusted through a focal rescaling process. However, the focal rescaling process of the prior art is limited by low angular resolution, because the maximum number of views that can be used during the focal rescaling process is limited by the angular resolution of the plenoptic capturing device.

OBJECTS OF THE INVENTION

Object of the present invention is to provide a process for the plenoptic capture of images (plenoptic imaging process) based on the correlation measure, i.e. a process of "Correlation Plenoptic Imaging" (CPI), which provides high resolution of the images captured by means of plenoptic devices.

In other words, object of the present invention is to provide a process for the plenoptic capture of images (plenoptic imaging process) based on the correlation measure, the process allowing the capture of images whose direct resolution is the maximum resolution allowed by the diffraction limit.

It is a further object of the invention to provide a process for the plenoptic capture of images (plenoptic capturing process) allowing high maximum depth of field to be obtained.

Another object of this invention is to provide image processing of focal rescaling, which allows an image previously captured outside the focal plane to be focused. This object is linked to the resolution of the captured plenoptic images, because the quality of a plenoptic focal rescaling depends on the angular resolution of the captured plenoptic image.

Another object of the present invention is to provide a "Correlation Plenoptic Imaging" (CPI) device allowing the obtainment of high resolution of the captured images, i.e. captured images whose resolution is the maximum resolution allowed by the diffraction limit, and allowing simultaneously obtaining high maximum depth of field as well as focal rescaling, the latter allowing an image previously captured outside the focal plane to be focused.

SUMMARY OF THE INVENTION

These and other objects of the present invention are achieved through a process for the plenoptic capture of photographic or cinematographic images of a scene, the process being based on the correlation measure and comprising the steps of:

Splitting a primary light beam coming from at least one light source in at least two distinct light beams;
Directing said at least two distinct light beams towards at least two distinct capturing sensors to capture images, of which at least one capturing sensor captures an angular measure of said scene and at least one capturing sensor captures a spatial measure of said scene, said angular measure being adapted to provide the propagation direction of at least one light beam reflected by said scene, said spatial measure being adapted to provide the image of said scene.

The present invention also relates to a "Correlation Plenoptic Imaging" (CPI) device for the plenoptic capture of photographic or cinematographic images of a scene, comprising:

At least two distinct capturing sensors to capture images, of which at least one sensor adapted to capture an angular measure and at least one sensor adapted to capture a spatial measure, said angular measure being adapted to provide the propagation direction of a light beam reflected by said scene, said spatial measure being adapted to provide the image of said scene;
At least one splitting element adapted to split a primary light beam coming from at least one light source in at least two distinct light beams directed towards said at least two distinct sensors.

According to an embodiment of the present invention, the process for the plenoptic capture of images (plenoptic imaging process) is characterized in that the angular-measure capturing sensor captures the image of the light source and the spatial-measure capturing sensor captures the image of the object of the scene.

According to another embodiment of the present invention, the process for the plenoptic capture of images is characterized in that the angular-measure capturing sensor captures the image of the lens of the device for the plenoptic capture of images (plenoptic imaging device) and the spatial-measure capturing sensor captures the image of the object of the scene.

In a preferred embodiment of the process and device according to the present invention, said at least two distinct light beams are two distinct light beams, said at least two distinct sensors are two distinct sensors, said at least one light beam reflected by said scene is a first light beam, said at least one angular-measure capturing sensor is a sensor for the capture of an angular measure, said at least one spatial-measure capturing sensor is a sensor for the capture of a spatial measure.

The acquisition of spatial and angular measures of the light beams in a given scene allows the user to select the plane of the focused scene and the depth of field after capturing the image. In this way a three-dimensional reconstruction of the scene can be obtained, or else one or more views of the same scene can be produced after the capture of a single image.

By splitting the light beams in at least two distinct beams according to the present invention, the decoupled spatial and angular measures of light beams can be captured. Advantageously, in this way the inverse proportionality dependence existing between spatial and angular resolution in currently known plenoptic devices can be decoupled, thereby increasing the angular resolution value without changing the spatial resolution, and vice versa.

Advantageously, by the capturing CPI process according to the present invention, high resolution of the images captured by a plenoptic device can be obtained, in particular the resolution of images is the maximum resolution allowed by the diffraction limit.

Furthermore, the plenoptic capturing CPI process according to the present invention provides linear dependence relation between the spatial resolution $N_x$ and the angular resolution $N_u$ according to the expression $N_{tot} = N_x + N_u$, $N_{tot}$ being a fixed value of the maximum total resolution of the device. Advantageously, the linear dependence between the spatial resolution and the angular resolution allows the maximum spatial resolution to be not excessively penalized, the angular resolution value being equal, as instead happens in the plenoptic capturing devices of the known art.

BRIEF DESCRIPTION OF THE FIGURES

Further characteristics and advantages of the present invention will be more evident in the following description, given for illustrative purposes by referring to the attached figures, in which:

- Figure 1 shows a representative diagram of a device for the plenoptic capture of images according to the currently known art;
- Figure 2 shows a representative diagram of an embodiment of a device and method for the plenoptic capture of images according to the present invention;
- Figure 3 shows a representative diagram of another possible embodiment of a device and method for the plenoptic capture of images according to the present invention;
- Figure 4 shows a representative diagram of another possible embodiment of a device and method for the plenoptic capture of images according to the present invention;
- Figure 5 shows a graph describing the pattern of the angular resolution $N_u$ as a function of to the spatial resolution $N_x$ of a given image captured by a total resolution sensor $N_{tot}$, both in the case of a conventional plenoptic capturing device (dotted line) and in the case of a plenoptic capturing CPI device (solid line).
- Figure 6a shows the simulation of an image captured according to the process and by means of the device of the present invention, in which the image object is placed on the focal plane.
- Figure 6b shows the simulation of an image captured according to the process and by means of the device of the present invention, in which the image object is placed outside the focal plane.
- Figure 6c shows the simulation of an image captured according to the process and by means of the device of the present invention, in which the image object is placed outside the focal plane, as in figure 6b. The captured image is processed again and focused by means of a focal rescaling procedure, still according to the present invention.

DETAILED DESCRIPTION OF THE FIGURES

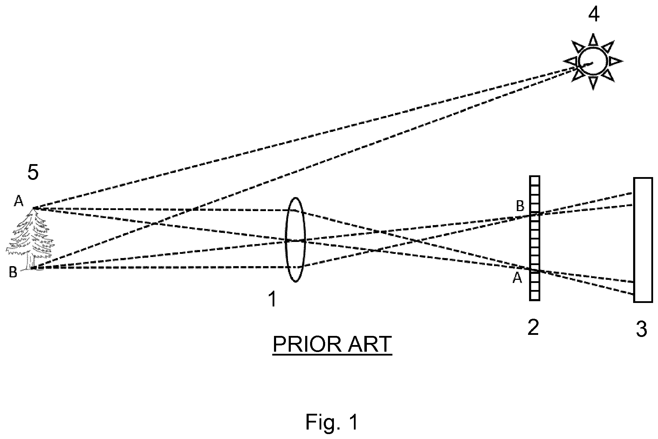

The plenoptic capture of images according to the currently known art is shown in the diagram of Figure 1. A device adapted to capture plenoptic images is structured similarly to conventional cameras. The substantial difference distinguishing a plenoptic device from a conventional camera is that, in the known art plenoptic device shown in Figure 1, there is a microlens array 2 located before the image capturing sensor 3. The light coming from a light source 4 illuminates an object 5 or a scene, thereby allowing the plenoptic device to capture light beams emitted by the light source 4 and reflected by the object 5 or the scene. The plenoptic device according to the currently known art comprises a main lens 1, a microlens array 2 and a capturing sensor 3 to digitally capture images, such as for example a CCD sensor.

In particular, the microlens array 2 is positioned on the focal plane of the image produced by the main lens 1. On the one hand, the image is refracted by the microlens array on the sensor located behind the array itself, thereby allowing the capture of the spatial measure of the scene; on the other hand, the microlens array reproduces on the sensor a number of the images of the main lens equal to the number of microlenses. Since the images produced by each portion of the main lens are reproduced with a slightly different perspective in accordance with the different angles the light beams have when they hit the microlenses, the microlens array also allows the angular capture of the scene.

This process for the plenoptic capture of images according to the currently known art allows the user to select the plane of the focused scene and the depth of field after the capture of the image, during a step of processing spatial and angular measures, thereby providing either a three-dimensional reconstruction of the scene or the making of one or more views of the same scene after the capture of the single image.

However, there is a wide gap between the spatial and angular resolutions of the image produced by means of the plenoptic capture process according to the currently known art. In particular, according to the known art, high spatial and angular resolutions of the captured image can not be simultaneously obtained. In fact, since the sensor 3 captures both the spatial and angular information of the image, the more available the angular resolution the more limited the spatial resolution.

The relationship between spatial resolution $N_x$ and angular resolution $N_u$ can be expressed by the law of inverse proportionality written in equation 1, in which $N_{tot}$ denotes a fixed value related to the total resolution of the sensor 3 of the plenoptic device.

$$N_{tot} = N_x \cdot N_u \quad \text{Eq.1}$$

On the basis of the inverse proportionality relation stated in equation 1, $N_{tot}$ being a fixed value, the spatial resolution $N_x$ decreases as the angular resolution $N_u$ increases in accordance with the inverse proportionality.

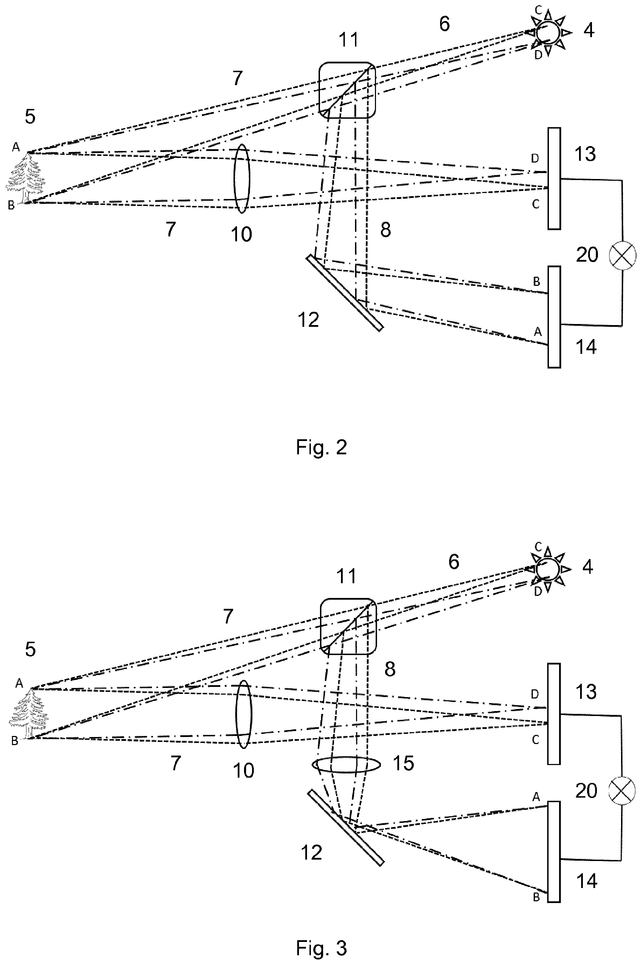

On the contrary, the limitations the currently known process for the plenoptic capture of images is subjected to, can be overcome thanks to the plenoptic capture of images according to the present invention, which provides a process and a device of "Correlation Plenoptic Imaging" (CPI) as depicted in figures 2, 3 and 4.

Figure 2 shows a first embodiment of the CPI device for the plenoptic capture of images according to the present invention. The light coming from a light source 4 passes through a splitting element 11 able to split the primary light beam 6 emitted from the light source 4 in two distinct light beams 7, 8. "Primary light beam" means, for example, the totality of light rays coming from a light source. "Distinct light beams" means two or more light beams originated by an optical device such as the splitting element 11, starting from a single primary incident light beam. In particular, the so-originated distinct light beams have the same spatial and angular information, but lower intensity with respect to the primary incident light beam. Moreover, the sum of the intensities of the originated light beams is less than or equal to the intensity of the primary incident light beam. More particularly, the sum of the intensities of the originated light beams is equal to the intensity of the primary incident light beam if there is no dissipation of light energy inside the splitting element 11. An example of splitting element 11 is a "beam splitter" also known as "image splitter". This element comprises at least two triangular prisms glued together to form a cubic element. The adhesion of the at least two parts making up the splitting element is caused by a resin layer at their bases. The thickness of the resin layer is such that a portion of the primary incident light beam (first distinct beam) is transmitted through the transparent element, and at least another portion of the incident light beam (second distinct beam) is reflected at a certain angle. According to the embodiment shown in Figures 2, 3 and 4, the splitting element 11 causes the primary light beam 6 coming from the light source 4 to split in two distinct light beams 7, 8.

Figure 2 also shows a lens 10 of the CPI device according to the present invention. The first light beam 7, i.e. the light beam transmitted through the splitting element 11, illuminates the scene of the object 5, then is reflected from the scene and finally is transmitted through the lens 10. During the passage through the lens 10, the first light beam 7 is refracted so as to reproduce the image of the light source on the angular-measure capturing sensor 13.

Figure 2 also shows a reflective element 12 of the CPI device according to the present invention. The second light beam 8, i.e. the light beam reflected by the splitting element 11, is directed onto the reflective element 12, for example a mirror, so as to converge on the spatial-measure capturing sensor 14.

According to a further embodiment of the present invention not shown in the figures, the second light beam 8 can be directed directly on the spatial-measure capturing sensor 14. In other words, the second light beam can be directed onto the sensor 14 without being reflected at first by a reflective element 12.

Figure 3 shows a second embodiment of the CPI device for the plenoptic capture of images according to the present invention. The CPI device shown in Figure 3 is similar to that shown in Figure 2, except that the former further comprises a second lens 15 interposed between the splitting element 11 and the spatial-measure capturing sensor 14. More particularly, the second lens is placed either between the splitting element 11 and the reflective element 12, or between the reflective element 12 and the sensor 14. The lens 15 is inserted in the CPI device in order to adjust the focal plane of the image captured by the spatial-measure capturing sensor 14.

The lens array 2 used by the plenoptic capturing devices of the prior art, as shown in figure 1, can be instead omitted in the plenoptic capture process according to the present invention, as shown in figures 2 and 3. In fact, as shown in figures 2 and 3, in the plenoptic capturing CPI device according to the present invention, the lens array 2 is replaced by a lens 10.

According to an embodiment of the process for the plenoptic capture of images (plenoptic imaging process) shown in figures 2 and 3, the angular-measure capturing sensor 13 captures the image of the light source 4, while the spatial-measure capturing sensor 14 captures the image of the object 5 of the scene.

In other words, the splitting element 11 splits a primary light beam 6 coming from at least one light source 4 in at least two distinct light beams 7, 8. The distinct light beams 7, 8 are directed towards at least two distinct image capturing sensors 13, 14, wherein at least one first light beam 7 is directed towards at least one angular-measure capturing sensor 13 to capture an angular measure of a scene and at least one second light beam 8 is directed towards at least one spatial-measure capturing sensor 14 to capture the spatial measure of said scene. In particular, said first light beam 7 propagates from the splitting element 11, is reflected by the scene and, possibly passing through the lens 10, is directed toward the angular-measure capturing sensor 13 to capture the angular measure of the scene.

In fact, as shown in figures 2 and 3, the image of the light source 4 characterized by points C and D, is reproduced on the angular-measure capturing sensor 13, according to laws of geometrical optics. Furthermore, by means of the correlation measure made by means of the correlation device 20, the image of the object 5 characterized by points A and B is reproduced on the spatial-measure capturing sensor 14 according to laws of quantum geometrical optics.

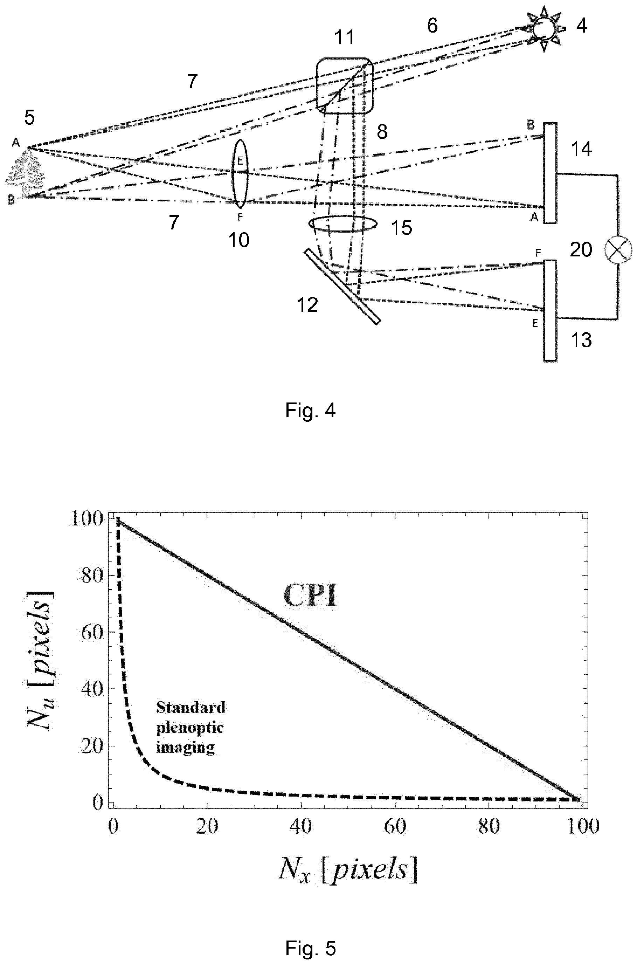

According to a further embodiment of the process for the plenoptic capture of images, shown in Figure 4, the function carried out by the sensors 13, 14 is exchanged. In particular, as shown in figure 4, the sensor 14 captures the image of the object 5 of the scene while the sensor 13 captures the image of the lens 10.

In other words, the splitting element 11 splits a primary light beam 6 coming from at least one light source 4 in at least two distinct light beams 7, 8. The distinct light beams 7, 8 are directed towards at least two distinct image capturing sensors 13, 14, wherein at least one first light beam 7 is directed towards at least one spatial-measure capturing sensor 14 to capture a spatial measure of a scene and at least one second light beam 8 is directed towards at least one angular-measure capturing sensor 13 to capture the angular measure of said scene. In particular, said first light beam 7 propagates from the splitting element 11, is reflected by the scene and, possibly passing through the lens 10, is directed toward the spatial-measure capturing sensor 14 to capture the spatial measure of the scene.

In fact, as shown in figure 4, the image of the object 5 characterized by points A and B, is reproduced on the sensor 14 according to laws of geometrical optics. Furthermore, by means of the correlation measure made by means of the correlation device 20, the image of the lens 10 characterized by points E and F is reproduced on the sensor 13 according to laws of quantum geometrical optics.

In the representative diagram in Figure 4, the device for the plenoptic capture of images (plenoptic imaging device) includes a second lens 15 and a reflective element 12 both interposed between the splitting element 11 and the sensor 13. In further embodiments not shown in the figures, either the second lens 15 or the reflective element 12, or both, are omitted.

By the plenoptic capture CPI process according to the present invention, each pixel of the angular-measure capturing sensor 13 shown in Figures 2, 3 and 4 can be correlated, by means of the correlating device 20, with the entire pixel array of the spatial-measure capturing sensor 14. This correlation allows the plenoptic image of the target scene to be reproduced. In other words the images, one per each pixel of the angular-measure capturing sensor 13, are all together correlated with the pixel array of the spatial-measure capturing sensor 14, thus providing the plenoptic image which can be subject to the following step of image processing.

It is specified that "correlate the pixels" means processing the latter by a correlation algorithm whose input are the pixels to be correlated and output is the correlated element, i.e. the plenoptic image, as expressed by a correlation function, as will be better explained hereafter.

It is further specified that each pixel of the spatial-measure capturing sensor 14 shown in Figures 2, 3 and 4, can be further correlated, by means of the correlating device 20, with the entire pixel array of the spatial-measure capturing sensor 13.

This process for the plenoptic capture of images according to the present invention allows the user to select the plane of the focused scene and the depth of field after the capture of the image, during a step of processing spatial and angular measures, thereby providing either a three-dimensional reconstruction of the scene or the making of one or more views of the same scene after the capture of the single image.

Furthermore, by the device CPI for the plenoptic capture of images according to the present invention, high resolution of the captured images can be obtained, the existing dependence between spatial and angular resolutions can be decoupled, and images having the maximum resolution allowed by the diffraction limit can be obtained.

According to the present invention, thanks to the spatio-temporal correlation between the two sensors 13 and 14 shown in figures 2, 3 and 4, the inverse proportionality constraint (Eq. 1) between angular and spatial resolutions in a given image can be overcome.

From a theoretical point of view, in fact, the correlation between two measures can be described by a Glauber correlation function $G(\rho_a, \rho_b, t_a, t_b)$, where $\rho_a$ is a vector indicating the position of a pixel on the spatial-measure capturing sensor 14, $\rho_b$ is a vector indicating the position of a pixel on the angular-measure capturing sensor 13, $t_a$ indicates the time in which the signal has been captured by the pixel at position $\rho_a$ of the sensor 14, $t_b$ indicates the time in which the signal has been captured by the pixel at position $\rho_b$ of the sensor 13. For example, in the case of chaotic light source, the spatial part of the correlation function is reduced as follows: $G(\rho_a, \rho_b) = I_a(\rho_a)I_b(\rho_b) + \Gamma(\rho_a, \rho_b)$ where $I_a$ and $I_b$ are respectively the intensities measured on the pixels at $\rho_a$ and $\rho_b$ positions of the two sensors 14 and 13 shown in Figures 2, 3 and 4, and do not contain any information about the correlation between the two measures; $\Gamma(\rho_a, \rho_b)$ denotes the plenoptic correlation function of the captured image and can be experimentally measured by means of an AC coupling, and the subsequent multiplication, of signals captured by the sensors 13 and 14. More in detail, for example in the embodiment shown in Figure 2, the correlation function $\Gamma(\rho_a, \rho_b)$ can be expressed as follows, according to the equation 2

$$\Gamma_{z_a, z_b}(\boldsymbol{\rho}_a, \boldsymbol{\rho}_b) =$$

$$C' \left[ \int d^2\boldsymbol{\rho}_0 A(\boldsymbol{\rho}_0) e^{-\frac{j\omega}{cz_b}\boldsymbol{\rho}_0 \cdot \frac{\boldsymbol{\rho}_b}{M}} \int d^2\boldsymbol{\rho}_s F(\boldsymbol{\rho}_s) G(|\boldsymbol{\rho}_s|)_{\left[\frac{\omega}{c}\left(\frac{1}{z_b}-\frac{1}{z_a}\right)\right]} e^{-\frac{j\omega}{cz_a}\left(\frac{z_a}{z_b}\boldsymbol{\rho}_0 - \boldsymbol{\rho}_a\right)} \cdot \boldsymbol{\rho}_s \right]^2 \qquad \text{Eq.2}$$

where $\rho_0$ and $\rho_s$ are, respectively, vectors in the transverse plane of the object 5 of the scene and in the transverse plane of the light source 4, $A(\rho_0)$ is the function describing the object 5 of the scene, $F(\rho_s)$ is the intensity profile of the light source 4, $M = \dfrac{s_i}{s_o}$ is the transverse magnification of the image of the light source on the sensor 13, $G(x)_{[y]} = e^{\frac{j\,x^2 y}{2}}$ is the Fresnel propagator, j is the imaginary unit, $\omega$ is the frequency of the light emitted from the light source 4, c is the light speed, $z_a$ and $z_b$ are respectively the distance of the sensor 14 and the object 5 from the light source 4.

By setting $z_a = z_b$, i.e. by setting the distance between the object and the light source equal to the distance between the light source and the sensor 14, and integrating the correlation function $\Gamma$ on the whole domain given by the sensor 13, the incoherent image $\Sigma_{z_b}(\rho_a)$ is obtained, as reported according to equation 3.

$$\Sigma_{z_b}(\boldsymbol{\rho}_a) = \int d^2\boldsymbol{\rho}_b \Gamma_{z_a,z_b}(\boldsymbol{\rho}_a,\boldsymbol{\rho}_b) \propto \int d^2\boldsymbol{\rho}_0 |A(\boldsymbol{\rho}_0)|^2 \left[\tilde{F}\left(\frac{\omega}{cz_b}(\boldsymbol{\rho}_o - \boldsymbol{\rho}_a)\right)\right]^2 \quad \text{Eq.3}$$

where $\tilde{F}$ is the Fourier transform of the function F describing the intensity profile of the light source 4.

The equation of the incoherent image is useful to express the "ghost image" of the object 5 on the sensor 14 produced the measure of correlation with the sensor 13.

Furthermore, according to the present invention, only the diffraction can limit the correlation between the angular measure and the spatial measure of the scene, considered in the single correspondence between points of the source (or lens 10) and points of the capturing sensor 13 for the angular capture of the scene shown in Figures 2 and 3 (or 4). In particular, for example in the embodiment shown in Figure 2, the values of the resolution of spatial and angular measures of the image are defined as shown in equations 4a and 4b.

$$\Delta \rho_a^{\lim} \sim \frac{\lambda z_a}{D_s}, \Delta \rho_b^{lim} \sim M\frac{\lambda z_b}{d} \qquad \text{Eq. 4a and 4b}$$

In particular, the equation 4a shows how proportionality links the diffraction limit on the spatial measure of the image $\Delta \rho_a^{\lim}$, the wavelength $\lambda$, the distance between the source and the sensor 14 of the spatial measure the image $z_a$, and the size of the source $D_s$. The equation 4b shows how proportionality links the diffraction limit on the angular measure of the image $\Delta \rho_b^{\lim}$, the transverse magnification $M$, the wavelength $\lambda$, the distance between the source and the scene $z_b$, and the finest detail of the object $d$.

Therefore, assuming that diffraction effects are negligible, the two resolutions are completely decoupled. This result, according to the present invention, allows the plenoptic capture of images, i.e. the capture of both spatial and angular measures of the image, thereby obtaining the highest possible resolution allowed, i.e. a resolution limited only by the phenomenon of diffraction.

On the basis of the above, the relationship between the spatial resolution $N_x$ and the angular resolution $N_u$, according to the present invention, can be expressed by the law of linearity given in equation 5, in which $N_{tot}$ denotes the total resolution, sum of the resolutions of each sensor 13, 14 (figures 2 and 3 and 4) of the plenoptic device according to the invention.

$$N_{tot} = N_x + N_u \qquad \text{Eq.5}$$

According to the linear relation stated in equation 5, $N_{tot}$ being a fixed value of the maximum total resolution of the device, the spatial resolution $N_x$ decreases as the angular resolution $N_u$ linearly increases.

In particular, the graph shown in Figure 5 is obtained by comparing the inverse proportionality shown in equation 1 with the linear relation shown in Equation 5. The graph of figure 5 shows the pattern of the angular resolution of the image $N_u$ as a function of the spatial resolution of the image $N_x$, both expressed by number of pixels. In particular, it can be seen how the (dashed) inverse proportionality line, typical of currently known plenoptic devices, highly limits $N_u$ the angular resolution of the image even in the region defined by limited spatial resolution of the image $N_x$. On the contrary,

the linear relation (solid line) according to the present invention allows the preservation of an angular resolution of the image $N_u$ always greater with respect to the previous case, for each value of the spatial resolution of the image $N_x$, and therefore provides a sufficiently high angular resolution of the image $N_u$ even in the region defined by high spatial resolution of the image $N_x$.

According to a further aspect of the present invention, the microlens array 2 used in currently known plenoptic devices as shown in Figure 1, is replaced by a single lens 10 having given focal power $f$. In particular, due to the size of the sensor 3 used in currently known plenoptic devices and dedicated to the spatial measure of the scene, the images of the main lens produced by the microlens array must have a magnifying ratio $M \ll 1$. This solution adopted in currently known plenoptic devices results in a poor resolution of the angular measure, i.e. the measure of the direction of the light beams of the scene. In general, in currently known devices the angular resolution $N_u$ is selected in the range of 9 to 12 pixels per side. Since the depth of field of a plenoptic system corresponds to the angular resolution, the limit on the angular resolution causes a limit on the depth of field of the captured image. On the contrary, in the CPI device according to the present invention, due to the presence of a single lens 10, an image of the light source can be obtained with any magnifying ratio $M$. In particular, a magnifying power $M \geq 1$ can be selected. For this reason, the resolution of the angular measure can be much greater than the angular resolution of the currently known plenoptic devices, thus greatly increasing the possibility of extending the depth of field of an image captured by means of the CPI process for the plenoptic capture of images, according to the present invention.

According to another aspect of the present invention, an image processing method of focal rescaling, which allows an image previously captured outside the focal plane to be focused, is described. In this case, by knowing the propagation direction of the light beams of the scene, the focal plane of the scene can be selected after the capture of the image. In particular, for example in the embodiment shown in Figure 2, it is possible to focally rescale an image as the value of the distance ($z_a$) between the light source and the spatial-measure capturing sensor 14 is different from the value of the distance ($z_b$) between the light source and the object 5 of the scene. In this case, focal rescaling means the ability to recover the out-of-focus image by trying to make it as consistent as possible with an image captured under conditions in which $z_a = z_b$.

This result can be mathematically shown by considering a rescaling correlation function $\Gamma$ as shown in the equation 6.

$$\Gamma_{z_a,z_b}\left(\frac{z_a}{z_b}\boldsymbol{\rho}_a - \frac{\boldsymbol{\rho}_b}{M}\left(1 - \frac{z_a}{z_b}\right), \boldsymbol{\rho}_b\right) \simeq \Gamma_{z_b,z_b}(\boldsymbol{\rho}_a, \boldsymbol{\rho}_b) \qquad \text{Eq. 6}$$

Starting from the rescaling correlation function, the expression of the rescaled incoherent image can be obtained by integrating the expression shown in equation 6.

$$\sum\nolimits_{z_a,z_b}^{\text{ref}}(\boldsymbol{\rho}_a) = \int d^2\boldsymbol{\rho}_b \Gamma_{z_a,z_b}\left(\frac{z_a}{z_b}\boldsymbol{\rho}_a - \frac{\boldsymbol{\rho}_b}{M}\left(1 - \frac{z_a}{z_b}\right), \boldsymbol{\rho}_b\right) \quad \text{Eq. 7}$$

The result of the described integration, shown in equation 7, indicates the ability of the rescaling process, allowed by the CPI process for the plenoptic capture of images according to the present invention, to focus plenoptic images in an extended domain of the depth of the field of the captured scene. It should be noted that equations 2, 3, 4a, 4b, 6, 7 concern a process and device for the plenoptic capture of images (plenoptic imaging process and device) according to the embodiment shown in figure 2, i.e. according to the embodiment in which the angular-measure capturing sensor 13 captures the image of the light source 4 while the spatial-measure capturing sensor 14 captures the image of the scene object 5, without the beam 8 passes through a lens 15. The not-shown expressions relating to a process and device for the plenoptic capture of images according to the embodiment shown in figure 3 and in figure 4, have the same structure of the equations 2, 3, 4a, 4b, 6, 7, being different only in some changes such as further magnifying ratios, such as the one relating to the lens 15, or integration domains or distances between images and sensors.

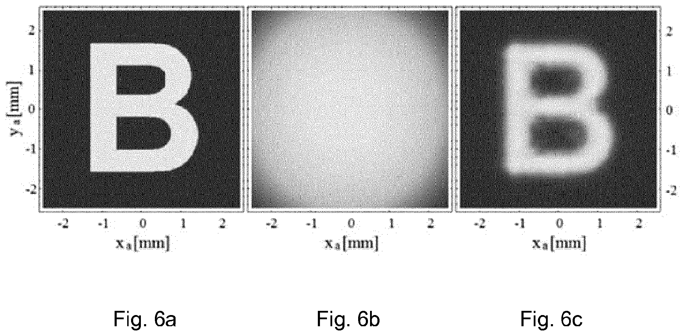

By way of example, it is possible to show an application result of the CPI process for the plenoptic capture of images according to the present invention. As shown in figure 6a-c, by a processing method following the capture of the image, called focal rescaling of the image, the latter, in this case constituted by a light letter B on a dark background, can be focused through the capture of the spatial and angular measures of the image.

In the focal rescaling process, the position of the focal plane of the image can be determined, thereby being able to compare the result with the captured image having the proper focal distance, as shown in figure 6a. In particular, figure 6a shows the image in which the object (the letter B) is placed at a distance from the device for the plenoptic capture of images, such that the distance ($z_a$) between the light source and the spatial-measure capturing sensor 14 is set equal to the distance ($z_b$) between the light source and the object. Therefore, the focal rescaling process allows the image captured as shown in figure 6b in which $z_b$ = 50 mm and $z_a$ = 100 *mm,* to be processed outside the focal plane, so as to obtain the image corrected by means of the focal rescaling process, as shown in figure 6c.

It is noted that the focal rescaling result shown in Figure 6c was obtained by means of the embodiment of the device and method of plenoptic capture of images shown in Figures 2 and 3, i.e. according to which the angular-measure capturing sensor 13 captures the image of the light source 4 and said at least one spatial-measure capturing sensor 14 captures the image of an object 5 of the scene. Absolutely similar results can be obtained by the embodiment of the device and method for the plenoptic capture of images, shown in figure 4.

**Claims**

1. Process for the plenoptic capture of photographic, cinematographic, microscopic or stereoscopic images of a scene, **characterized in that** it comprises the following steps:

   splitting a primary light beam (6) coming from at least one light source (4) in at least two distinct light beams (7, 8); directing said at least two distinct light beams (7, 8) towards at least two distinct capturing sensors (13, 14) to capture images, of which at least one capturing sensor (13) is an angular-measure capturing sensor and at least one capturing sensor (14) is a spatial-measure capturing sensor, each pixel of said angular-measure capturing sensor (13) is correlated, by means of a correlating device (20), with the entire pixel array of said spatial-measure capturing sensor (14) the angular measure being adapted to provide the propagation direction of at least one light beam (7) reflected by said scene, the spatial measure being adapted to provide the image of said scene.

2. Process according to claim 1, wherein the process of correlating said spatial measure and said angular measure comprises correlating each pixel of at least one sensor of said at least two distinct sensors (13, 14) with at least one pixel of at least another one sensor of said distinct sensors (13, 14).

3. Process according to claim 1, **characterized in that** at least two distinct light beams (7, 8) are obtained by means of at least one beam splitter (11).

4. Process according to claim 3, **characterized in that** at least one second light beam (8) is directed onto at least one sensor of said at least two distinct sensors (13, 14) by means of a reflective element (12).

5. Process according to claims 3 and 4, **characterized in that** directing said at least two distinct light beams (7, 8) towards at least one sensor of said at least two distinct sensors (13, 14) comprises the step of passing through a focal lens (10, 15).

6. Process according to claim 1, **characterized in that** said at least one angular measure capturing sensor (13), captures the image of said light source (4) and **in that** said at least one spatial measure capturing sensor (14), captures the image of an object (5) of the scene.

7. Process according to claim 1, **characterized in that** said at least one angular measure capturing sensor (13), captures the image of a lens (10) and **in that** said at least one spatial measure capturing sensor (14), captures the image of an object (5) of the scene.

8. Process according to any one of the preceding claims, wherein said at least two distinct light beams (7, 8) are two distinct light beams, said at least two distinct sensors (13, 14) are two distinct sensors, said at least one light beam (7) is a light beam, said at least one second light beam (8) is a second light beam, said at least one angular measure capturing sensor (13) is a capturing sensor to capture an angular measure, said at least one spatial measure capturing sensor (14) is a capturing sensor to capture a spatial measure.

9. Device for the plenoptic capture of photographic or cinematographic images of a scene, **characterized in that** it comprises:

   at least two distinct capturing sensors (13, 14) to capture images, of which at least one capturing sensor (13) is an angular-measure capturing sensor and at least one capturing sensor (14) is a spatial-measure capturing sensor, each pixel of said angular-measure capturing sensor (13) is correlated, by means of a correlating device (20), with the entire pixel array of said spatial-measure capturing sensor (14), the angular measure being adapted to provide the propagation direction of a light beam (7) reflected by said scene, said spatial measure being adapted to provide the image of said scene;

at least one splitting element (11) adapted to split a primary light beam (6) coming from at least one light source (4) in at least two distinct light beams (7, 8) directed towards said at least two distinct sensors (13, 14).

10. Device according to claim 9, **characterized in that** said at least one splitting element (11) is a beam splitter.

11. Device according to claim 9, **characterized by** further comprising a reflective element (12) adapted to direct said at least one second light beam (8) towards at least one sensor of said at least two distinct sensors (13, 14).

12. Device according to claim 9, **characterized by** further comprising at least one lens (10, 15) adapted to direct at least one beam of said at least two distinct light beams (7, 8) towards at least one sensor of said at least two distinct sensors (13, 14).

13. Device according to claim 9, **characterized in that** said at least one angular measure capturing sensor (13), captures the image of said light source (4) and **in that** said at least one spatial measure capturing sensor (14), captures the image of an object (5) of the scene.

14. Device according to claim 9, **characterized in that** said at least one angular measure capturing sensor (13), captures the image of a lens (10) and **in that** said at least one spatial measure capturing sensor (14), captures the image of an object (5) of the scene.

15. Device according to any one of the preceding claims, wherein said at least two distinct light beams (7, 8) are two distinct light beams, said at least two distinct sensors (13, 14) are two distinct sensors, said at least one light beam (7) is a light beam, said at least one second light beam (8) is a second light beam, said at least one capturing sensor (13) is an angular measure capturing sensor, said at least one capturing sensor (14) is an angular-measure capturing sensor.

**Patentansprüche**

1. Verfahren zur plenoptischen Erfassung von fotografischen, kinematografischen, mikroskopischen oder stereoskopischen Bildern einer Szene, **dadurch gekennzeichnet, dass** dieses die folgenden Schritte umfasst:

Aufteilen eines primären Lichtstrahls (6), der von mindestens einer Lichtquelle (4) kommt, in mindestens zwei verschiedene Lichtstrahlen (7, 8);

Richten der mindestens zwei verschiedenen Lichtstrahlen (7, 8) auf mindestens zwei verschiedene Erfassungssensoren (13, 14) zum Erfassen von Bildern, von denen mindestens ein Erfassungssensor (13) ein Winkelmaß erfassender Sensor und mindestens ein Erfassungssensor (14) ein Raummaß erfassender Sensor ist, wobei jeder Pixel des Winkelmaß messenden Sensors (13) mittels einer Korrelationsvorrichtung (20) korreliert wird mit dem gesamten Pixel-Array des Raummaß erfassenden Sensors (14), wobei das Winkelmaß dazu eingerichtet ist, die Ausbreitungsrichtung von mindestens einem durch die Szene reflektierten Lichtstrahl (7) bereitzustellen, wobei das Raummaß dazu eingerichtet ist, das Bild der Szene bereitzustellen.

2. Verfahren nach Anspruch 1, wobei der Vorgang des Korrelierens des Raummaßes und des Winkelmaßes das Korrelieren jedes Pixels von mindestens einem Sensor der mindestens zwei verschiedenen Sensoren (13, 14) mit mindestens einem Pixel von mindestens einem anderen Sensor der verschiedenen Sensoren (13, 14) umfasst.

3. Verfahren nach Anspruch 1, **dadurch gekennzeichnet, dass** die mindestens zwei verschiedenen Lichtstrahlen (7, 8) mittels mindestens eines Strahlteilers (11) erhalten werden.

4. Verfahren nach Anspruch 3, **dadurch gekennzeichnet, dass** mindestens ein zweiter Lichtstrahl (8) auf mindestens einen Sensor der mindestens zwei verschiedenen Sensoren (13, 14) mittels eines reflektierenden Elements (12) gerichtet wird.

5. Verfahren nach einem der Ansprüche 3 und 4, **dadurch gekennzeichnet, dass** der Schritt des Richtens der mindestens zwei verschiedenen Lichtstrahlen (7, 8) auf mindestens einen Sensor der mindestens zwei verschiedenen Sensoren (13, 14) den Schritt des Passierens durch eine Fokallinse (10, 15) umfasst.

**6.** Verfahren nach Anspruch 1, **dadurch gekennzeichnet, dass** der mindestens eine Winkelmaß erfassende Sensor (13) das Bild der Lichtquelle (4) erfasst und dass der mindestens eine Raummaß erfassende Sensor (14) das Bild eines Objekts (5) der Szene erfasst.

**7.** Verfahren nach Anspruch 1, **dadurch gekennzeichnet, dass** der mindestens eine Winkelmaß erfassende Sensor (13) das Bild einer Linse (10) erfasst und dass der mindestens eine Raummaß erfassende Sensor (14) das Bild eines Objekts (5) der Szene erfasst.

**8.** Verfahren nach einem der vorhergehenden Ansprüche, wobei die mindestens zwei verschiedenen Lichtstrahlen (7, 8) zwei verschiedene Lichtstrahlen sind, die mindestens zwei verschiedenen Sensoren (13, 14) zwei verschiedene Sensoren sind, wobei der mindestens eine Lichtstrahl (7) ein Lichtstrahl ist, der mindestens eine zweite Lichtstrahl (8) ein zweiter Lichtstrahl ist, der mindestens eine Winkelmaß erfassende Sensor (13) ein Erfassungssensor zum Erfassen eines Winkelmaßes ist, wobei der mindestens eine Raummaß erfassende Sensor (14) ein Erfassungssensor zum Erfassen eines Raummaßes ist.

**9.** Vorrichtung zum plenoptischen Erfassen von fotografischen oder kinematografischen Bildern einer Szene, **dadurch gekennzeichnet, dass** diese umfasst:

mindestens zwei verschiedene Erfassungssensoren (13, 14) zum Erfassen von Bildern, von denen mindestens ein Erfassungssensor (13) ein Winkelmaß erfassender Sensor und mindestens ein Erfassungssensor (14) ein Raummaß erfassender Sensor ist, wobei jeder Pixel des Winkelmaß erfassenden Sensors (13) mittels einer Korrelationsvorrichtung (20) korreliert wird mit dem gesamten Pixelarray des Raummaß erfassenden Sensors (14), wobei das Winkelmaß eingerichtet ist, um die Ausbreitungsrichtung eines von der Szene reflektierten Lichtstrahls (7) bereitzustellen, wobei das Raummaß dazu eingerichtet ist, das Bild der Szene bereitzustellen; mindestens ein Aufteilungselement (11), welches eingerichtet ist, um einen primären Lichtstrahl (6), der von mindestens einer Lichtquelle (4) kommt, in mindestens zwei verschiedene Lichtstrahlen (7, 8) zu teilen, die auf die mindestens zwei verschiedenen Sensoren (13, 14) gerichtet sind.

**10.** Vorrichtung nach Anspruch 9, **dadurch gekennzeichnet, dass** das mindestens eine Aufteilungselement (11) ein Strahlteiler ist.

**11.** Vorrichtung nach Anspruch 9, **dadurch gekennzeichnet, dass** sie ferner ein reflektierendes Element (12) umfasst, welches eingerichtet ist, um den mindestens einen zweiten Lichtstrahl (8) auf mindestens einen Sensor der mindestens zwei verschiedenen Sensoren (13, 14) zu richten.

**12.** Vorrichtung nach Anspruch 9, **dadurch gekennzeichnet, dass** sie ferner mindestens eine Linse (10, 15) umfasst, die eingerichtet ist, um mindestens einen Strahl der mindestens zwei verschiedenen Lichtstrahlen (7, 8) auf mindestens einen Sensor der mindestens zwei verschiedenen Sensoren (13, 14) zu richten.

**13.** Vorrichtung nach Anspruch 9, **dadurch gekennzeichnet, dass** der mindestens eine Winkelmaß erfassende Sensor (13) das Bild der Lichtquelle (4) erfasst und dass der mindestens eine Raummaß erfassende Sensor (14) das Bild eines Objekts (5) der Szene erfasst.

**14.** Vorrichtung nach Anspruch 9, **dadurch gekennzeichnet, dass** der mindestens eine Winkelmaß erfassende Sensor (13) das Bild einer Linse (10) erfasst und dass der mindestens eine Raummaß erfassende Sensor (14) das Bild eines Objekts (5) der Szene erfasst.

**15.** Vorrichtung nach einem der vorhergehenden Ansprüche, wobei die mindestens zwei verschiedenen Lichtstrahlen (7, 8) zwei verschiedenen Lichtstrahlen sind, die mindestens zwei verschiedenen Sensoren (13, 14) zwei verschiedene Sensoren sind, wobei der mindestens eine Lichtstrahler (7) ein Lichtstrahl ist, wobei der mindestens eine zweite Lichtstrahl (8) ein zweiter Lichtstrahl ist, wobei der mindestens eine Erfassungssensor (13) ein Winkelmaß erfassender Sensor ist, wobei der mindestens eine Erfassungssensor (14) ein Raummaß erfassender Sensor ist.

**Revendications**

**1.** Procédé de capture plénoptique d'images photographiques, cinématographiques, microscopiques ou stéréoscopiques d'une scène, **caractérisé en ce qu'**il comprend les étapes suivantes :

division d'un faisceau lumineux primaire (6) venant d'au moins une source de lumière (4) en au moins deux faisceaux lumineux distincts (7, 8) ;

acheminement desdits au moins deux faisceaux lumineux distincts (7, 8) vers au moins deux capteurs de capture distincts (13, 14) pour capturer des images, dont au moins un capteur de capture (13) est un capteur de capture de mesure angulaire et au moins un capteur de capture (14) est un capture de mesure spatiale, chaque pixel dudit capteur de capture de mesure angulaire (13) est corrélé, au moyen d'un dispositif de corrélation (20), au réseau entier de pixels dudit capteur de capture de mesure spatiale (14), la mesure angulaire étant à même de fournir la direction de propagation d'au moins un faisceau lumineux (7) réfléchi par ladite scène, la mesure spatiale étant à même de fournir l'image de ladite scène.

2. Procédé selon la revendication 1, dans lequel le procédé de corrélation de ladite mesure spatiale et de ladite mesure angulaire comprend la corrélation de chaque pixel d'au moins un capteur desdits au moins deux capteurs distincts (13, 14) avec au moins un pixel d'au moins un autre capteur desdits capteurs distincts (13, 14).

3. Procédé selon la revendication 1, **caractérisé en ce qu'**au moins deux faisceaux lumineux distincts (7, 8) sont obtenus au moyen d'au moins un diviseur de faisceau (11).

4. Procédé selon la revendication 3, **caractérisé en ce qu'**au moins un second faisceau lumineux (8) est acheminé sur au moins un capteur desdits au moins deux capteurs distincts (13, 14) au moyen d'un élément réfléchissant (12).

5. Procédé selon les revendications 3 et 4, **caractérisé en ce que** ledit acheminement desdits au moins deux faisceaux lumineux distincts (7, 8) vers au moins un capteur desdits au moins deux capteurs distincts (13, 14) comprend l'étape de passage à travers une lentille focale (10, 15).

6. Procédé selon la revendication 1, **caractérisé en ce que** ledit au moins un capteur de capture d'image angulaire (13) capture l'image de ladite source de lumière (4) et **en ce que** ledit au moins un capteur de mesure spatiale (14) capture l'image d'un objet (5) de la scène.

7. Procédé selon la revendication 1, **caractérisé en ce que** ledit au moins un capteur de capture de mesure angulaire (13) capture l'image d'une lentille (10) et **en ce que** ledit au moins un capteur de capture de mesure spatiale (14) capture l'image d'un objet (5) de la scène.

8. Procédé selon l'une quelconque des revendications précédentes, dans lequel lesdits au moins deux faisceaux lumineux distincts (7, 8) sont deux faisceaux lumineux distincts, lesdits au moins deux capteurs distincts (13, 14) sont deux capteurs distincts, ledit au moins un faisceau lumineux (7) est un faisceau lumineux, ledit au moins un second faisceau lumineux (8) est un second faisceau lumineux, ledit au moins un capteur de capture de mesure angulaire (13) est un capteur de capture pour capturer une mesure angulaire, ledit au moins un capteur de capture de mesure spatiale (14) est un capteur de capture pour capturer une mesure spatiale.

9. Dispositif de capture plénoptique d'images photographiques ou cinématographiques d'une scène, **caractérisé en ce qu'**il comprend :

au moins deux capteurs de capture distincts (13, 14) pour capturer des images, dont au moins un capteur de capture (13) est un capteur de capture de mesure angulaire et au moins un capteur de capture (14) est un capture de mesure spatiale, chaque pixel dudit capteur de capture de mesure angulaire (13) est corrélé, au moyen d'un dispositif de corrélation (20), au réseau entier de pixels dudit capteur de capture de mesure spatiale (14), la mesure angulaire étant à même de fournir la direction de propagation d'au moins un faisceau lumineux (7) réfléchi par ladite scène, ladite mesure spatiale étant à même de fournir l'image de ladite scène ;

au moins un élément de division (11) qui est à même de diviser un faisceau lumineux primaire (6) venant d'au moins une source de lumière (4) en au moins deux faisceaux lumineux distincts (7, 8) acheminés vers lesdits au moins deux capteurs distincts (13, 14).

10. Dispositif selon la revendication 9, **caractérisé en ce que** ledit au moins un élément de division (11) est un diviseur de faisceau.

11. Dispositif selon la revendication 9, **caractérisé en ce qu'**il comprend en outre un élément réfléchissant (12) qui est à même d'acheminer ledit au moins un second faisceau lumineux (8) vers au moins un capteur desdits au moins deux capteurs distincts (13, 14).

**12.** Dispositif selon la revendication 9, **caractérisé en ce qu'**il comprend en outre au moins une lentille (10, 15) qui est à même d'acheminer au moins un faisceau desdits au moins deux faisceaux lumineux distincts (7, 8) vers au moins un capteur desdits au moins deux capteurs distincts (13, 14).

**13.** Dispositif selon la revendication 9, **caractérisé en ce que** ledit au moins un capteur de capture de mesure angulaire (13) capture l'image de ladite source de lumière (4) et **en ce que** ledit au moins un capteur de capture de mesure spatiale (14) capture l'image d'un objet (5) de la scène.

**14.** Dispositif selon la revendication 9, **caractérisé en ce que** ledit au moins un capteur de capture de mesure angulaire (13) capture l'image d'une lentille (10) et **en ce que** ledit au moins un capteur de capture de mesure spatiale (14) capture l'image d'un objet (5) de la scène.

**15.** Dispositif selon l'une quelconque des revendications précédentes, dans lequel lesdits au moins deux faisceaux lumineux distincts (7, 8) sont deux faisceaux lumineux distincts, lesdits au moins deux capteurs distincts (13, 14) sont deux capteurs distincts, ledit au moins un faisceau lumineux (7) est un faisceau lumineux, ledit au moins un second faisceau lumineux (8) est un second faisceau lumineux, ledit au moins un capteur de capture (13) est un capteur de capture de mesure angulaire, ledit au moins un capteur de capture (14) est un capteur de capture de mesure spatiale.

PRIOR ART

Fig. 1

Fig. 2

Fig. 3

Fig. 4

Fig. 5

Fig. 6a        Fig. 6b        Fig. 6c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7620309 B
- US 20110284724 A

- CN 102087411